# EUROPÄISCHE PATENTANMELDUNG

(11) **EP 3 363 274 A1**
(43) Veröffentlichungstag der Anmeldung: **22.08.2018**
(21) Anmeldenummer: 18401016.3
(22) Anmeldetag: 14.02.2018
(51) Int. Cl.: A01B 69/08, B62D 13/00

(54) **VERFAHREN ZUM STEUERN EINES VON EINER ZUGMASCHINE GEZOGENEN LANDWIRTSCHAFTLICHEN ARBEITSGERÄTS**

(30) Priorität: 21.02.2017 DE 102017103518
(71) Anmelder: Amazonen-Werke H. Dreyer GmbH & Co. KG, 49205 Hasbergen (DE)
(72) Erfinder: Kessen, Peter, 49439 Steinfeld (DE); Rührwiem, Pascal, 49205 Hasbergen (DE)

(57) **Zusammenfassung**

Die Erfindung betrifft ein Verfahren zum Steuern eines von einer Zugmaschine (10) gezogenen landwirtschaftlichen Arbeitsgeräts (12), mit den Schritten: Erfassen von Informationen zu einer von der Zugmaschine (10) ausgeführten Kurvenfahrt mittels einer Erfassungseinrichtung der Zugmaschine (10), Bereitstellen der Informationen an einer standardisierten Schnittstelle der Zugmaschine (10) zum Abruf durch das landwirtschaftliche Arbeitsgerät (12), Abrufen der Informationen von der standardisierten Schnittstelle der Zugmaschine (10) durch das landwirtschaftliche Arbeitsgerät (12), und selbsttätiges Steuern des landwirtschaftlichen Arbeitsgeräts (12) auf Grundlage der abgerufenen Informationen.

## Beschreibung

Die Erfindung betrifft ein Verfahren zum Steuern eines von einer Zugmaschine gezogenen landwirtschaftlichen Arbeitsgeräts nach dem Oberbegriff des Patentanspruchs 1, eine Steuerungseinrichtung für ein landwirtschaftliches Arbeitsgerät nach dem Oberbegriff des Patentanspruchs 7 und ein landwirtschaftliches Arbeitsgerät nach dem Oberbegriff des Patentanspruchs 9.

Landwirtschaftliche Arbeitsgeräte werden häufig von Zugmaschinen, wie etwa Traktoren, gezogen. Gezogene landwirtschaftliche Arbeitsgeräte können beispielsweise Düngerstreuer oder Pflanzenschutzspritzen sein.

Insbesondere bei Kurvenfahren auf einer zu bearbeitenden landwirtschaftlichen Fläche besteht die Gefahr, dass Nutzpflanzen von den Rädern der Zugmaschine und/oder von den Rädern des gezogenen landwirtschaftlichen Arbeitsgeräts überfahren und somit beschädigt oder sogar zerstört werden.

Um eine Beschädigung von Nutzpflanzen zu verhindern, wurden sogenannte Nachlaufsteuerungen entwickelt, welche bewirken, dass die Räder des gezogenen landwirtschaftlichen Arbeitsgeräts in der Spur der Zugmaschine laufen.

Bei bekannten Nachlaufsteuerungen erfasst ein Sensor der Zugmaschine Informationen zu einer von der Zugmaschine ausgeführten Kurvenfahrt. Diese Informationen werden der Steuerungseinrichtung des landwirtschaftlichen Arbeitsgeräts über ein eigens hierfür eingesetztes separates Kabel zur Verfügung gestellt, damit diese Informationen zur Steuerung des landwirtschaftlichen Arbeitsgeräts genutzt werden können.

Aus der Druckschrift EP 3 090 922 A1 ist außerdem eine Nachlaufsteuerung bekannt, bei welcher ein Sensor zur Erfassung von Informationen zu einer von der Zugmaschine ausgeführten Kurvenfahrt an dem landwirtschaftlichen Arbeitsgerät angeordnet ist, sodass auf ein separates Kabel zur Übertragung dieser Informationen verzichtet werden kann.

Ferner schlägt die Druckschrift WO 2016/192973 A1 vor, die Einrichtung zur Steuerung des landwirtschaftlichen Arbeitsgeräts an der Zugmaschine anzuordnen.

Darüber hinaus sind in der Landwirtschaft standardisierte Schnittstellen bekannt, über welche landwirtschaftlichen Arbeitsgeräten Informationen zum Abruf bereitgestellt werden können. Die Druckschrift DE 10 2015 000 984 A1 offenbart eine landwirtschaftliche Arbeitsmaschine, welche Informationen über eine standardisierte ISOBUS-Schnittstelle von der Zugmaschine abruft, um die Tiefenführung eines Bodenbearbeitungsgeräts zu steuern. Mit dem beschriebenen Verfahren kann jedoch keine Nachlaufsteuerung umgesetzt werden.

Die bekannten Nachlaufsteuerungen sind entweder aufgrund der Notwendigkeit eines separaten Verbindungskabels äußert aufwändig oder nicht hinreichend präzise, um den stetig wachsenden Anforderungen in der Landwirtschaft gerecht zu werden.

Die der Erfindung zugrunde liegende Aufgabe besteht somit darin, die Nachlaufsteuerung eines gezogenen landwirtschaftlichen Arbeitsgeräts zu vereinfachen und/oder derart zu verbessern, dass die Beschädigung von Nutzpflanzen während der Kurvenfahrt eines landwirtschaftlichen Zuggespanns verringert wird.

Die Aufgabe wird gelöst durch ein Verfahren der eingangs genannten Art, wobei die Informationen von der standardisierten Schnittstelle der Zugmaschine durch das landwirtschaftliche Arbeitsgerät abgerufen werden und das landwirtschaftliche Arbeitsgerät auf Grundlage der abgerufenen Informationen selbsttätig gesteuert wird.

Die Erfindung macht sich die Erkenntnis zunutze, dass die standardisierte Schnittstelle einer modernen Zugmaschine genutzt werden kann, um eine Nachlaufsteuerung für ein landwirtschaftliches Arbeitsgerät umsetzten zu können. Das Bereitstellen von Informationen zu der von der Zugmaschine ausgeführten Kurvenfahrt an der standardisierten Schnittstelle der Zugmaschine erlaubt das Abrufen und die Verwendung dieser Informationen, ohne dass ein zusätzliches separates Verbindungskabel zwischen der Zugmaschine und dem landwirtschaftlichen Arbeitsgerät notwendig ist. Die Realisierung einer Nachlaufsteuerung wird somit erheblich vereinfacht. Ferner kann bei dem erfindungsgemäßen Verfahren auch auf die Anordnung von Sensoren, welche Informationen zu einer von der Zugmaschine ausgeführten Kurvenfahrt liefern, an dem landwirtschaftlichen Arbeitsgerät verzichtet werden. Außerdem entfällt die Notwendigkeit, eine Einrichtung zur Steuerung des landwirtschaftlichen Arbeitsgeräts an der Zugmaschine anzuordnen. Vorzugsweise handelt es sich bei dem Standard, nach welchem die Schnittstelle der Zugmaschine ausgebildet ist, um einen in der Landtechnik üblichen und verbreiteten Standard.

In einer bevorzugten Ausführungsform des erfindungsgemäßen Verfahrens umfassen die Informationen zu der von der Zugmaschine ausgeführten Kurvenfahrt Informationen zu dem Kurvenverlauf und/oder Informationen zu der Kurvenposition. Die Informationen zu dem Kurvenverlauf können beispielsweise einen oder mehrere Kurvenradien umfassen. Die Informationen zu der Kurvenposition können beispielsweise Positionsinformationen zu dem Kurvenanfang und/oder dem Kurvenende umfassen.

In einer vorteilhaften Weiterbildung des erfindungsgemäßen Verfahrens umfasst die Erfassungseinrichtung einen Positionssensor, einen Wegsensor, einen Geschwindigkeitssensor und/oder einen Beschleunigungssensor. Der Beschleunigungssensor kann beispielsweise als Gierratensensor ausgebildet sein. Ferner kann die Erfassungseinrichtung einen oder mehrere Drehzahlsensoren aufweisen, mittels welchen die Drehzahlen der Räder der Zugmaschine erfasst werden können. Vorzugsweise stellen die Erfassungseinrichtung oder ein oder mehrere Sensoren der Erfassungseinrichtung ihre Daten weiteren Systemen, wie beispielsweise Assistenzsystemen der Zugmaschine bereit.

Außerdem ist ein erfindungsgemäßes Verfahren bevorzugt, bei welchem die standardisierte Schnittstelle der Zugmaschine eine standardisierte Bus-Schnittstelle der Zugmaschine ist. Vorzugsweise ist die standardisierte Bus-Schnittstelle eine ISOBUS-Schnittstelle. Insbesondere unterstützt die ISOBUS-Schnittstelle die Norm ISO 11783. Das Bereitstellen der Informationen zu der von der Zugmaschine ausgeführten Kurvenfahrt an einer standardisierten Bus-Schnittstelle der Zugmaschine erlaubt einerseits ein unkompliziertes Abrufen der Informationen durch Drittgeräte, wie dem gezogenen landwirtschaftlichen Arbeitsgerät, und andererseits ein Abrufen der Informationen durch weitere interne Systeme der Zugmaschine, wie etwa weiteren Assistenzsystemen, welche den Maschinenführer bei dem auszuführenden Arbeitsvorgang unterstützen.

In einer Weiterbildung des erfindungsgemäßen Verfahrens erfolgt das Abrufen der Informationen von der standardisierten Schnittstelle der Zugmaschine durch das landwirtschaftliche Arbeitsgerät kabelgebunden oder kabellos. Wenn das Abrufen der Informationen von der standardisierten Schnittstelle der Zugmaschine durch das landwirtschaftliche Arbeitsgerät kabellos erfolgt, weisen die Zugmaschine und das landwirtschaftliche Arbeitsgerät jeweils ein Kommunikationsmodul auf, welches dazu eingerichtet ist, elektromagentische Wellen zu senden und/oder zu empfangen. Beispielsweise erfolgt die Übertragung der Informationen von der Zugmaschine auf das landwirtschaftliche Arbeitsgerät durch die Verwendung von Funktechnik, insbesondere über eine standardisierte Ad-hoc-Funkverbindung. Insbesondere kann zur Übertragung der Informationen von der Zugmaschine auf das landwirtschaftliche Arbeitsgerät eine Bluetooth-Verbindung genutzt werden. Alternativ kann die Übertragung der Informationen unter Nutzung eines Mobilfunknetzes erfolgen. Wenn das Abrufen der Informationen von der standardisierten Schnittstelle der Zugmaschine durch das landwirtschaftliche Arbeitsgerät kabelgebunden erfolgt, ist es bevorzugt, dass während des Betriebs des landwirtschaftlichen Arbeitsgeräts nur ein Datenkabel die Zugmaschine und das landwirtschaftliche Arbeitsgerät signalleitend verbindet. Neben dem Datenkabel können in diesem Fall während des Betriebs des landwirtschaftlichen Arbeitsgeräts weitere mechanische und/oder fluidtechnische Verbindungen zwischen der Zugmaschine und dem landwirtschaftlichen Arbeitsgerät bestehen.

In einer vorteilhaften Ausgestaltung des erfindungsgemäßen Verfahrens umfasst das selbsttätige Steuern des landwirtschaftlichen Arbeitsgeräts auf Grundlage der abgerufenen Informationen das selbsttätige Steuern einer Lenkeinrichtung des landwirtschaftlichen Arbeitsgeräts, insbesondere derart, dass das landwirtschaftliche Arbeitsgerät in der Spur der Zugmaschine fährt. Auf diese Weise wird eine präzise Nachlaufsteuerung für das landwirtschaftliche Arbeitsgerät umgesetzt, durch welche eine unnötige Beschädigung und/oder Zerstörung von Nutzpflanzen vermieden wird.

Die der Erfindung zugrunde liegende Aufgabe wird ferner durch eine Steuerungseinrichtung der eingangs genannten Art gelöst, wobei das Kommunikationsmodul dazu eingerichtet ist, Informationen zu einer von einer Zugmaschine ausgeführten Kurvenfahrt von einer standardisierten Schnittstelle der Zugmaschine abzurufen, und die Recheneinheit dazu eingerichtet ist, auf Grundlage der abgerufenen Informationen ein Steuerungssignal für das landwirtschaftliche Arbeitsgerät zu erzeugen. Hinsichtlich der Vorteile und Modifikationen der erfindungsgemäßen Steuerungseinrichtung wird auf die Vorteile und Modifikationen des erfindungsgemäßen Verfahrens verwiesen.

Das Steuerungssignal kann beispielsweise eine Zustandsänderung der Lenkeinrichtung des landwirtschaftlichen Arbeitsgeräts verursachen. Insbesondere kann das Steuerungssignal eine Betätigung eines oder mehrerer Lenkaktuatoren der Lenkeinrichtung verursachen. Der eine oder die mehreren Lenkaktuatoren der Lenkeinrichtung können beispielsweise pneumatisch, hydraulisch oder elektrisch angetrieben sein.

In einer besonders bevorzugten Ausführungsform ist die erfindungsgemäße Steuerungseinrichtung dazu eingerichtet, in einem Verfahren zum Steuern eines von einer Zugmaschine gezogenen landwirtschaftlichen Arbeitsgeräts nach einer der vorstehend beschriebenen Ausführungsformen verwendet zu werden.

Die der Erfindung zugrunde liegende Aufgabe wird darüber hinaus mit einem landwirtschaftlichen Arbeitsgerät der eingangs genannten Art gelöst, wobei die Steuerungseinrichtung des landwirtschaftlichen Arbeitsgeräts nach einer der vorstehend beschriebenen Ausführungsformen ausgebildet ist. Hinsichtlich der Vorteile und Modifikationen des erfindungsgemäßen landwirtschaftlichen Arbeitsgeräts wird auf die Vorteile und Modifikationen der erfindungsgemäßen Steuerungseinrichtung verwiesen. Das landwirtschaftliche Arbeitsgerät kann beispielsweise ein Düngerstreuer oder eine Pflanzenschutzspritze sein.

Weitere Einzelheiten der Erfindung sind der Figurenbeschreibung und den Zeichnungen zu entnehmen. Es zeigen
- Fig.1: ein schematisches Ausführungsbeispiel des erfindungsgemäßen landwirtschaftlichen Arbeitsgeräts in einer Draufsicht; und
- Fig. 2: das in der Fig. 1 dargestellte landwirtschaftliche Arbeitsgerät in einer schematischen Darstellung.

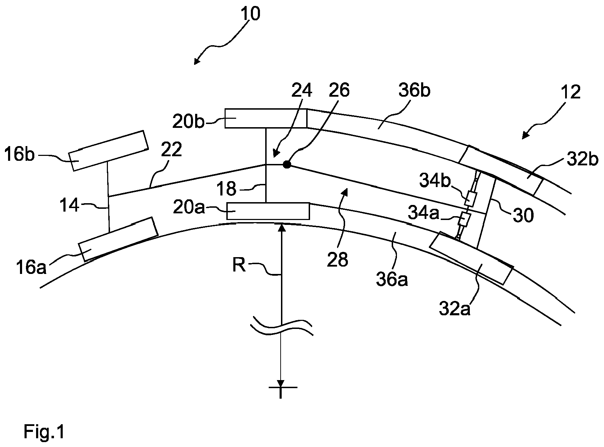

Die Fig. 1 zeigt eine als Traktor ausgebildete Zugmaschine 10, welche sich in einer Kurvenfahrt befindet und ein als Pflanzenschutzspritze ausgebildetes landwirtschaftliches Arbeitsgerät 12 zieht.

Die Zugmaschine 10 weist eine Vorderachse 14 und eine Hinterachse 18 auf. An der Vorderachse 14 sind zwei Vorderräder 16a, 16b angeordnet. An der Hinterachse 18 sind zwei Hinterräder 20a, 20b angeordnet. Die Spurbreite der Vorderräder 16a, 16b und die Spurbreite der Hinterräder 20a, 20b stimmen überein.

Die Vorderachse 14 und die Hinterachse 18 sind mit dem Maschinenrahmen 22 verbunden. Ferner weist die Zugmaschine 10 eine Kupplungseinrichtung 24 auf, welche einen Kuppelpunkt 26 definiert, an welchem die Kupplungseinrichtung 28 des landwirtschaftlichen Arbeitsgeräts 12 um eine im Wesentlichen vertikale Schwenkachse schwenkbar angelenkt ist.

Das landwirtschaftliche Arbeitsgerät 12 weist eine Achse 30 auf, an welcher Räder 32a, 32b angeordnet sind. Die Räder 32a, 32b sind mit einer Lenkeinrichtung 34a, 34b des landwirtschaftlichen Arbeitsgeräts 12 verbunden, über welche die Räder 32a, 32b jeweils um eine im Wesentlichen vertikal verlaufende Drehachse gedreht werden können.

Die von der Zugmaschine 10 und dem landwirtschaftlichen Arbeitsgerät 12 gefahrene Kurve kann zumindest abschnittsweise kreisförmig angenähert werden und weist somit zumindest abschnittsweise im Bereich der kurveninneren Räder 20a, 32a einen Radius R auf. Die Räder 32a, 32b laufen in den Spuren 36a, 36b der Hinterräder 20a, 20b der Zugmaschine 10.

Die Zugmaschine 10 erfasst Informationen zu der von der Zugmaschine 10 ausgeführten Kurvenfahrt und stellt diese Informationen zum Abruf durch das landwirtschaftliche Arbeitsgerät 12 bereit. Das landwirtschaftliche Arbeitsgerät 12 ruft die bereitgestellten Informationen zu der von der Zugmaschine 10 ausgeführten Kurvenfahrt ab und steuert auf Grundlage der abgerufenen Informationen selbsttätig die eigene Lenkeinrichtung 34a, 34b.

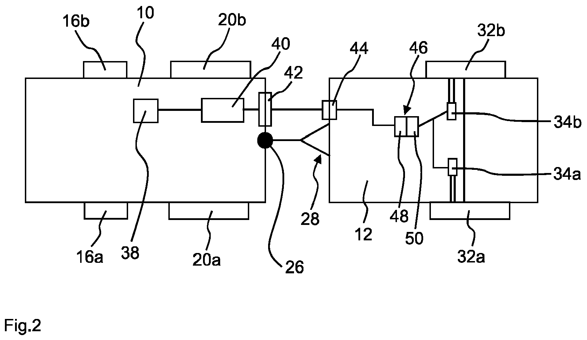

Die Fig. 2 zeigt, dass die Zugmaschine 10 eine Erfassungseinrichtung 38, eine Steuerungseinheit 40 und eine standardisierte Schnittstelle 42 aufweist, wobei die Erfassungseinrichtung 38 signalleitend mit der Steuerungseinheit 40 und die Steuerungseinheit 40 signalleitend mit der standardisierten Schnittstelle 42 verbunden ist.

Die Erfassungseinrichtung 38 umfasst einen als Gierratensensor ausgebildeten Beschleunigungssensor, über welchen die Informationen zu der von der Zugmaschine 10 ausgeführten Kurvenfahrt erfasst werden. Die Informationen zu der von der Zugmaschine 10 ausgeführten Kurvenfahrt umfassen Informationen zu dem Kurvenverlauf und außerdem Informationen zu der Kurvenposition. Die Informationen zu dem Kurvenverlauf umfassen dabei den Radius R der gefahrenen Kurve, wobei die Informationen zu der Kurvenposition die Anfangsposition und die Endposition der Kurve umfassen.

Die von der Erfassungseinrichtung 38 erfassten Informationen zu der von der Zugmaschine 10 ausgeführten Kurvenfahrt werden der Steuerungseinheit 40 bereitgestellt. Die Steuerungseinheit 40 kann die Informationen entweder unverändert oder bearbeitet der standardisierten Schnittstelle 42 bereitstellen.

Das landwirtschaftliche Arbeitsgerät 12 ruft die über die standardisierte Schnittstelle 42 der Zugmaschine 10 bereitgestellten Informationen über die eigene standardisierte Schnittstelle 44 ab. Die standardisierten Schnittstellen 42, 44 sind als Bus-Schnittstellen, nämlich als ISOBUS-Schnittstellen, ausgebildet, sodass das Abrufen der Informationen durch das landwirtschaftliche Arbeitsgerät 12 kabelgebunden erfolgt. In einer alternativen Ausführungsform kann das Abrufen der Informationen durch das landwirtschaftliche Arbeitsgerät 12 auch über eine standardisierte kabellose Verbindung zwischen der Zugmaschine 10 und dem landwirtschaftlichen Arbeitsgerät 12 erfolgen. Die standardisierte Schnittstelle 44 des landwirtschaftlichen Arbeitsgeräts 12 ist mit einer Steuerungseinrichtung 46 des landwirtschaftlichen Arbeitsgeräts 12 signalleitend verbunden.

Die Steuerungseinrichtung 46 weist ein Kommunikationsmodul 48 und eine signalleitend mit dem Kommunikationsmodul 48 verbundene Recheneinheit 50 auf. Das Kommunikationsmodul 48 ist dazu eingerichtet, die Informationen zu der von der Zugmaschine 10 ausgeführten Kurvenfahrt über die standardisierte Schnittstelle 44 des landwirtschaftlichen Arbeitsgeräts 12 von der standardisierten Schnittstelle 42 der Zugmaschine 10 abzurufen. Die Recheneinheit 50 ist dazu eingerichtet, auf Grundlage der abgerufenen Informationen ein Steuerungssignal für das landwirtschaftliche Arbeitsgerät 12 zu erzeugen.

Das erzeugte Steuerungssignal wird dann der Lenkeinrichtung 34a, 34b bereitgestellt, sodass ein selbsttätiges Steuern der Lenkeinrichtung 34a, 34b des landwirtschaftlichen Arbeitsgeräts 12 umgesetzt wird. Das Steuern erfolgt dabei derart, dass das landwirtschaftliche Arbeitsgerät 12 in der Spur 36a, 36b der Zugmaschine 10 fährt.

### Bezugszeichenliste

- 10: Zugmaschine
- 12: landwirtschaftliches Arbeitsgerät
- 14: Vorderachse
- 16a, 16b: Vorderräder
- 18: Hinterachse
- 20a, 20b: Hinterräder
- 22: Maschinenrahmen
- 24: Kupplungseinrichtung
- 26: Kuppelpunkt
- 28: Kupplungseinrichtung
- 30: Achse
- 32a, 32b: Räder
- 34a, 34b: Lenkeinrichtung
- 36a, 36b: Spuren
- 38: Erfassungseinrichtung
- 40: Steuerungseinheit
- 42: Schnittstelle
- 44: Schnittstelle
- 46: Steuerungseinrichtung
- 48: Kommunikationsmodul
- 50: Recheneinheit
- R: Radius

## Patentansprüche

1. Verfahren zum Steuern eines von einer Zugmaschine (10) gezogenen landwirtschaftlichen Arbeitsgeräts (12), mit den Schritten:
- Erfassen von Informationen zu einer von der Zugmaschine (10) ausgeführten Kurvenfahrt mittels einer Erfassungseinrichtung (38) der Zugmaschine (10); und
- Bereitstellen der Informationen an einer standardisierten Schnittstelle (42) der Zugmaschine (10) zum Abruf durch das landwirtschaftliche Arbeitsgerät (12);
**gekennzeichnet durch** die Schritte:
- Abrufen der Informationen von der standardisierten Schnittstelle (42) der Zugmaschine (10) durch das landwirtschaftliche Arbeitsgerät (12); und
- selbsttätiges Steuern des landwirtschaftlichen Arbeitsgeräts (12) auf Grundlage der abgerufenen Informationen.

2. Verfahren nach Anspruch 1,
**dadurch gekennzeichnet, dass** die Informationen zu der von der Zugmaschine (10) ausgeführten Kurvenfahrt Informationen zu dem Kurvenverlauf und/oder Informationen zu der Kurvenposition umfassen.

3. Verfahren nach Anspruch 1 oder 2,
**dadurch gekennzeichnet, dass** die Erfassungseinrichtung (38) einen Positionssensor, einen Wegsensor, einen Geschwindigkeitssensor und/oder einen Beschleunigungssensor umfasst.

4. Verfahren nach einem der vorstehenden Ansprüche,
**dadurch gekennzeichnet, dass** die standardisierte Schnittstelle (42) der Zugmaschine (10) eine standardisierte Bus-Schnittstelle der Zugmaschine (10) ist.

5. Verfahren nach einem der vorstehenden Ansprüche,
**dadurch gekennzeichnet, dass** das Abrufen der Informationen von der standardisierten Schnittstelle (42) der Zugmaschine (10) durch das landwirtschaftliche Arbeitsgerät (12) kabelgebunden oder kabellos erfolgt.

6. Verfahren nach einem der vorstehenden Ansprüche,
**dadurch gekennzeichnet, dass** das selbsttätige Steuern des landwirtschaftlichen Arbeitsgeräts (12) auf Grundlage der abgerufenen Informationen den folgenden Schritt umfasst:
- selbsttätiges Steuern einer Lenkeinrichtung (34a, 34b) des landwirtschaftlichen Arbeitsgeräts (12), insbesondere derart, dass das landwirtschaftliche Arbeitsgerät (12) in der Spur der Zugmaschine (10) fährt.

7. Steuerungseinrichtung (46) für ein landwirtschaftliches Arbeitsgerät (12), mit
- einem Kommunikationsmodul (48), und
- einer signalleitend mit dem Kommunikationsmodul (48) verbundenen Recheneinheit (50);
**dadurch gekennzeichnet, dass** das Kommunikationsmodul (48) dazu eingerichtet ist, Informationen zu einer von einer Zugmaschine (10) ausgeführten Kurvenfahrt von einer standardisierten Schnittstelle (42) der Zugmaschine (10) abzurufen, und die Recheneinheit (50) dazu eingerichtet ist, auf Grundlage der abgerufenen Informationen ein Steuerungssignalfür das landwirtschaftliche Arbeitsgerät (12) zu erzeugen.

8. Steuerungseinrichtung (46) nach Anspruch 7,
**dadurch gekennzeichnet, dass** die Steuerungseinrichtung (46) dazu eingerichtet ist, in einem Verfahren zum Steuern eines von einer Zugmaschine (10) gezogenen landwirtschaftlichen Arbeitsgeräts (12) nach einem der Ansprüche 1 bis 6 verwendet zu werden.

9. Landwirtschaftliches Arbeitsgerät (12), mit
- einer Steuerungseinrichtung (46),
**dadurch gekennzeichnet, dass** die Steuerungseinrichtung (46) nach einem der Ansprüche 7 oder 8 ausgebildet ist.
